(19) **Europäisches Patentamt**
**European Patent Office**
**Office européen des brevets**

(11) Veröffentlichungsnummer : **0 142 751**
**B1**

(12) **EUROPÄISCHE PATENTSCHRIFT**

(45) Veröffentlichungstag der Patentschrift :
30.09.87

(51) Int. Cl.⁴ : **H 04 N   5/32**

(21) Anmeldenummer : **84113153.5**

(22) Anmeldetag : **31.10.84**

(54) **Röntgenstereo-Subtraktionsvorrichtung.**

(30) Priorität : **14.11.83 DE 3341215**

(43) Veröffentlichungstag der Anmeldung :
**29.05.85 Patentblatt 85/22**

(45) Bekanntmachung des Hinweises auf die Patenterteilung : **30.09.87 Patentblatt 87/40**

(84) Benannte Vertragsstaaten :
**DE FR**

(56) Entgegenhaltungen :
**EP-A- 0 088 356**
**EP-A- 0 088 935**

(73) Patentinhaber : **Siemens Aktiengesellschaft Berlin und München**
**Wittelsbacherplatz 2**
**D-8000 München 2 (DE)**

(72) Erfinder : **Haendle, Jörg**
**Leipziger Strasse 16g**
**D-8520 Erlangen (DE)**
Erfinder : **Maass, Wolfgang**
**Haunritzer Weg 2**
**D-8500 Nürnberg (DE)**

EP 0 142 751 B1

Jouve, 18, rue St-Denis, 75001 Paris, France

## Beschreibung

Die Erfindung betrifft eine Röntgenstereo-Subtraktionsvorrichtung, die einen Röntgengenerator, Mittel zur Erzeugung zweier Röntgenstrahlenbündel von zwei in geringem Abstand angeordneten Fokussen, deren Zentralstrahlen sich in der Aufnahmeebene schneiden, und eine Röntgenbildverstärker-Fernsehkette aufweist, mit einem Röntgenbildverstärker, auf dessen Eingangsleuchtschirm die von beiden Fokussen zeitlich hintereinander erzeugten Strahlenbilder erscheinen, mit einer Fernsehkamera zur Aufnahme der Röntgenbildverstärker-Ausgangsbilder, mit einer Zentraleinheit zur Steuerung der Fernsehkette, mit einer Verarbeitungsschaltung mit Bildspeichermitteln zur Einspeicherung von Röntgenstereo-Fernsehbildern, mit Subtraktionsstufen zur Subtraktion von einem gespeicherten und einem dem gespeicherten zeitlich nachfolgenden Videosignal und mit einem daran angeschlossenen StereoSichtgerät. Derartige Röntgenstereovorrichtungen werden benutzt, um Röntgenbilder räumlich betrachten zu können. Sie dienen zum Beispiel dazu,. ohne komplizierte Beobachtung und gegebenenfalls Messung die Einführung und genaue Positionierung eines Katheters zu ermöglichen.

In der EP-A- 0 088 356 ist eine Röntgenstereovorrichtung gemäß dem Oberbegriff bereits beschrieben, die eine Stereo-Röntgenröhre aufweist, deren Brennflecke alternierend aktiviert werden. Dadurch wird die Untersuchungsperson aus verschiedenen Richtungen durchstrahlt. Die auf den Eingangsleuchtschirm des Röntgenbildverstärkers fallenden Strahlenbilder werden von einer Fernsehkamera erfaßt und ebenfalls alternierend in zwei Bildspeicher eingelesen, wobei Aufnahmen ohne Kontrastmittel in einem ersten Speicherpaar und anschließend Subtraktionsaufnahmen in einem zweiten Speicherpaar gespeichert werden. Die Speicherinhalte werden durch ein Stereo-Sichtgerät den entsprechenden Augen einer Untersuchungsperson zugeführt.

Hierbei stellt sich aber das Problem, daß, bedingt durch die Stereotechnik, in einem Videosignal eines Stereoteilbildes ein restlicher Informationsgehalt des vorhergehenden, anderen Stereoteilbildes enthalten ist. Dieser kann bis zu 30 % annehmen, so daß diese Restinformation insbesondere bei der darauffolgenden Subtraktionstechnik besonders stört.

In der US-PS 4,064,530 ist ein Rauschverminderungssystem für Fernseheinrichtungen beschrieben, bei dem durch Rekursivfilterung in einem Speicher ein über mehrere Abtastungen gemitteltes Bild eingelesen wird. Hierzu wird das aktuelle Videosignal mit einem Faktor 1-a und das gespeicherte Videosignal mit einem Faktor a multipliziert. Dadurch wird das aktuelle Videosignal entsprechend abgeschwächt und mit dem ebenfalls abgeschwächten, gespeicherten Videosignal überlagert, so daß das Rauschen, beispielsweise einer Fernsehanlage, aber auch das Quantenrauschen verringert werden.

Die Erfindung geht von der Aufgabe aus, eine Vorrichtung der eingangs genannten Art zu schaffen, die auf einfache Weise eine Stereo-Subtraktionstechnik ermöglicht, bei der störende Informationen insbesondere des anderen Stereokanales unterdrückt werden.

Die Aufgabe wird erfindungsgemäß dadurch gelöst, daß pro Kanal ein erster Bildspeicher vorhanden ist, in dem die Videosignale entsprechender, aufeinanderfolgender Stereoteilbilder gewichtet summiert werden, daß an dem Ausgang des ersten Bildspeichers eine erste Subtraktionsstufe angeschlossen ist, deren zweitem Eingang das abgeschwächte Ausgangssignal des jeweils anderen ersten Bildspeichers zugeführt wird, daß der Ausgang der ersten Subtraktionsstufe mit einem zweiten Bildspeicher und einer zweiten Subtraktionsstufe verbunden ist, an deren zweitem Eingang der Ausgang des zweiten Bildspeichers angeschlossen ist, und daß an dem Ausgang der zweiten Subtraktionsstufe das Stereo-Sichtgerät angeschlossen ist. Durch diese Vorrichtung erhält man auf einfachste Weise eine Stereo-Subtraktionsvorrichtung mit nur vier Bildspeichern, zwei Schaltungen zur Integration und vier Differenzstufen.

Die gewichtete Summierung oder Integration läßt sich in einfacher Weise durchführen, wenn dafür Schaltungen vorgesehen sind, die zwei Multiplikationsstufen aufweisen, deren Ausgänge mit einer Additionsstufe verbunden sind, die an dem ersten Bildspeicher angeschlossen sind, wobei in der ersten Multiplikationsstufe das aktuelle Videosignal mit einem Faktor k und in der zweiten Multiplikationsstufe das Ausgangssignal des ersten Bildspeichers mit einem Faktor 1-k multipliziert wird. Die beiden ersten Bildspeicher lassen sich als Normenwandler einsetzen wenn die Eingangsbildfrequenz der ersten Bildspeicher kleiner ist als deren Ausgangsbildfrequenz. Die Kompensation von Restinformationen des vorhergehenden Stereoteilbildes in dem aktuellen Videosignal läßt sich auf vorteilhafte Weise erreichen, wenn an den Ausgängen der ersten Bildspeicher zur Abschwächung je ein Kennlinienspeicher angeschlossen ist, die mit der ersten Subtraktionsstufe des jeweils anderen Kanals verbunden sind.

Die Erfindung ist nachfolgend anhand eines in der Zeichnung dargestellten Ausführungsbeispieles näher erläutert. Es zeigen :

Figur 1  ein Blockschaltbild einer Röntgenstereovorrichtung, und

Figur 2  ein Blockschaltbild einer erfindungsgemäßen Ausführung der in Figur 1  dargestellten Verarbeitungsschaltung.

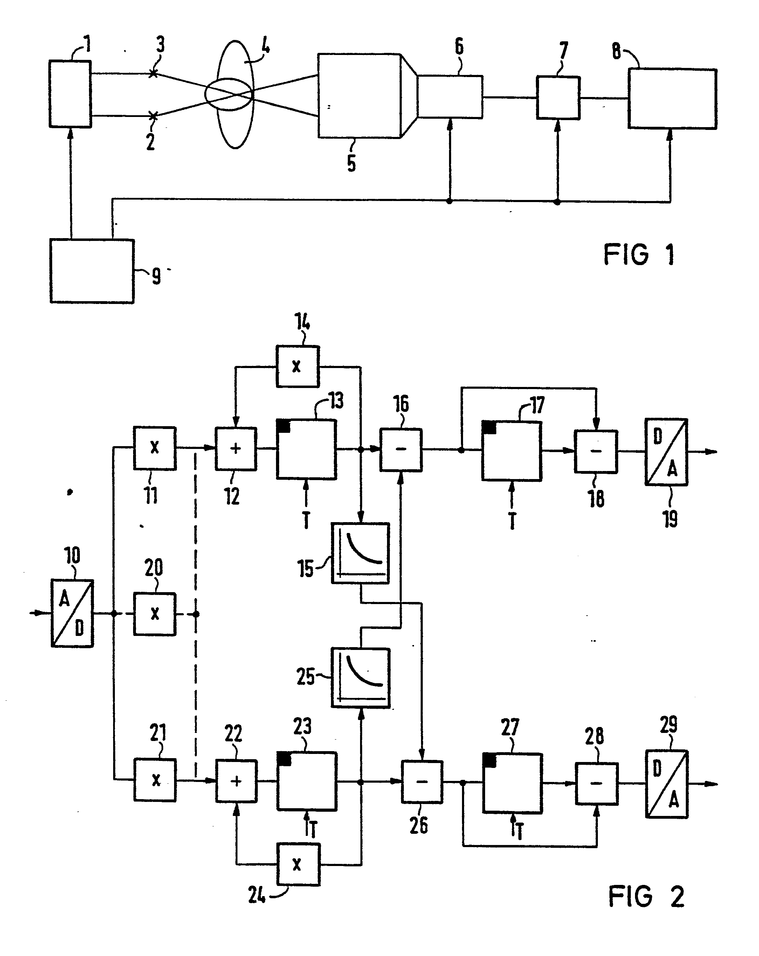

In der Figur 1  ist ein Röntgengenerator 1 zur Erzeugung der Hochspannung für zwei symbolisch dargestellte Fokusse 2 und 3 gezeigt, die zu zwei Röntgenröhren oder einer Röntgenröhre mit zwei Fokussen gehören können. Die Röntgenstrahlen durchdringen ein Aufnahmeobjekt 4, wobei sie sich in der Aufnahmeebene schneiden, und erzeugen auf dem Eingangsleuchtschirm eines Röntgenbildverstärkers 5 ein Strahlenbild. Die auf dem Ausgangsleuchtschirm des Röntgenbildverstärkers 5 wiedergegebenen Stereobilder werden von einer Fernsehkamera 6 aufgenommen, deren Videosignal einer Verarbeitungsschaltung 7 zugeführt ist. Das Ausgangssignal der Verarbeitungsschaltung 7 wird auf einem Stereo-Sichtgerät 8 wiedergegeben. Eine Zentraleinheit 9 steuert die Funktionsabläufe und die Synchronisation des Röntgengenerators 1, der Fernsehkamera 6, der Verarbeitungsschaltung 7 und des Stereo-Sichtgerätes 8.

Im folgenden soll nun die Funktionsweise der Röntgenstereovorrichtung beschrieben werden. Von der Zentraleinheit 9 gesteuert wird zuerst der Fokus 2 von dem Röntgengenerator 1 aktiviert, der ein Strahlenbündel in Richtung auf das Aufnahmeobjekt 4 aussendet, das auf dem Eingangsleuchtschirm des Röntgenbildverstärkers 5 ein Strahlenbild erzeugt. Das erste, rechte Stereobild wird mittels der Fernsehkamera 6 von dem Ausgangsleuchtschirm des Röntgenbildverstärkers aufgenommen und der Verarbeitungsschaltung 7 zugeführt. Nach erfolgter Aufnahme wird der Fokus 3 aktiviert, der ein zweites Strahlenbündel aussendet, dessen Zentralstrahl den des ersten Strahlenbündels in der Aufnahmeebene, d. h. innerhalb des Aufnahmeobjektes 4, schneidet. Das von dem Röntgenbildverstärker 5 und der Fernsehkamera 6 erfaßte Strahlenbild wird als linkes Stereoteilbild der Verarbeitungsschaltung 7 zugeführt.

In der Figur 2 ist die Verarbeitungsschaltung 7 mit einem Analog/Digital-Wandler (A/D-Wandler 10) dargestellt. Der Ausgang des A/D-Wandlers 10 ist mit zwei ersten Multiplikationsstufen 11 und 21 verbunden, die an je einer Additionsstufe 12 und 22 angeschlossen sind. Die Ausgangssignale der Additionsstufen 12 und 22 werden in ersten Bildspeichern 13 und 23 gespeichert, deren Ausgänge über je eine zweite Multiplikationsstufe 14 und 24 auf die zweiten Eingänge der Additionsstufen 12 und 22 rückgekoppelt sind. In den ersten Multiplikationsstufen 11 und 21 wird das aktuelle Videosignal der Fernsehkamera 6 mit einem Faktor k multipliziert, während das aus den ersten Bildspeichern 13 und 23 rückgekoppelte Signal mit einem Faktor 1-k multipliziert wird. In den Additionsstufen 12 und 22 wird dieses Signal gemischt und erneut in die ersten Bildspeicher 13 und 23 eingelesen. Dadurch erhält man ein über mehrere Bilder integriertes Videosignal für rauscharme Röntgen-Stereobilder.

Die Ausgänge der ersten Bildspeicher 13 und 23 sind weiterhin mit je einer ersten Subtraktionsstufe 16 und 26 verbunden, deren zweitem Eingang das Ausgangssignal des jeweils anderen ersten Bildspeichers 13 und 23 über zwei Schaltungen zur Abschwächung des Videosignales, beispielsweise zwei Kennlinienspeicher 15 und 25, zugeführt wird, in denen die Amplitudenabhängigkeit des Trägheitsverhaltens der Fernsehaufnahmeröhre gespeichert ist. Dadurch wird erreicht, daß das im Videosignal enthaltene Restsignal des vorhergehenden Bildes, das in Abhängigkeit von der Helligkeit des vorhergehenden Bildes mit unterschiedlichem Anteil als Geisterbild im aktuellen Stereoteilbild enthalten ist, aus diesem vollständig eliminiert wird.

Die auf diese Art von Störsignalen befreiten Videosignale werden je einem zweiten Bildspeicher 17, 27 und einer zweiten Subtraktionsstufe 18, 28 zugeführt. Mit den zweiten Eingängen der zweiten Subtraktionsstufen 18, 28 sind die Ausgänge der zweiten Bildspeicher 17, 27 verbunden. An den Ausgängen der zweiten Subtraktionsstufen 18, 28 ist über zwei Digital/Analog-Wandler (D/A-Wandler 19, 29) das Stereo-Sichtgerät 8 angeschlossen, das in bekannter Weise beispielsweise aus einem Monitor bestehen kann, dem die Stereoteilbilder nacheinander zugeführt werden, und eine Umlaufblende aufweist, mit der die Zuordnung der Stereoteilbilder zum entsprechenden Auge des Beobachters erfolgt. Sie kann aber auch zwei Monitore aufweisen, die mit Polarisationsfilter mit um 90° verschobener Polarisationsrichtung versehen sind und deren Strahlengänge über einen teildurchlässigen Spiegel vereint werden. Die Untersuchungsperson betrachtet diese Stereobilder mittels einer Polarisationsbrille.

Nach Einschalten des Röntgengenerators werden Stereobilder erzeugt, die nacheinander der Verarbeitungsschaltung 7 zugeführt werden. Diese aktuellen Videosignale werden über mehrere Stereoteilbilder in den entsprechenden ersten Bildspeichern 13, 23 in Abhängigkeit von dem Faktor k integriert. Anschließend erfolgt die Elimination des störenden Restsignales des jeweils anderen Stereoteilbildes. Zu einem bestimmten Zeitpunkt wird entweder manuell von der Untersuchungsperson oder automatisch eines dieser über mehrere Bilder integrierten Videosignale in die zweiten Bildspeicher 17 und 27 eingespeichert, das einem Leer- oder Maskenbild entspricht. In den zweiten Subtraktionsstufen 18 und 28 wird nunmehr im Durchleuchtungsbetrieb von den Maskenbildern das über mehrere Bilder integrierte aktuelle Videosignal subtrahiert. Erfolgt nun eine Injektion eines Kontrastmittels, so läßt sich der Kontrastmittelverlauf auf dem Stereo-Sichtgerät als Stereobild erkennen. Hat die Kontrastmitteldichte ihr Maximum erreicht, so kann zur optimalen Darstellung eines Füllungsbildes die Einspeicherung in die ersten Bildspeicher 12 und 23 gestoppt werden. Dadurch werden den zweiten Subtraktionsstufen 18 und 28 je zwei Videosignale zugeführt, die einem optimalen Füllungsbild und einem Leerbild entsprechen, so daß auf dem Stereo-Sichtgerät 8 ein optimales Röntgenstereo-Subtraktionsbild zu betrachten ist.

Die beschriebene Röntgenstereovorrichtung läßt sich auch in der Pfadfindertechnik einsetzen, wenn anstelle der Leerbilder in den zweiten Bildspeichern 17 und 27 Aufnahmen nach einer erfolgten Probeinjektion eingelesen werden. Diese gespeicherten Aufnahmen werden in bekannter Weise in den nachgeschalteten zweiten Subtraktionsvorrichtungen 18 und 28 mit dem aktuellen Durchleuchtungsbild negativ überlagert, wobei die Ausgangssignale der zweiten Bildspeicher 17 und 27 abgeschwächt werden. Auf dem Stereo-Sichtgerät 8 ist also das Durchleuchtungsbild zu erkennen, in dem die interessierenden Gefäße durch die Subtraktion hervorgehoben werden, so daß sie nunmehr deutlich als helle Pfade zu erkennen sind und eine Einführung eines Katheters erleichtern. Eine Abschwächung des in den zweiten Bildspeichern 17 und 27 enthaltenen Videosignales kann dabei entweder in der Ausgangsschaltung des Bildspeichers oder in der Subtraktionsvorrichtung erfolgen. Es beann hierzu aber auch zwischen den zweiten Bildspeichern 17, 27 und den zweiten Subtraktionsvorrichtungen 18, 28 eine Schaltung vorgesehen sein, die eine eventuell einstellbare Abschwächung ermöglicht.

Der Faktor k der Multiplikationsstufen 11 und 21, 14 und 24 kann beispielsweise in Abhängigkeit von auftretenden Bewegungen variiert werden, so daß die Anzahl der Bilder verändert werden kann, über die integriert wird. Im Normalfall nimmt der Faktor k beispielsweise einen Wert von 1/16 an, so daß über etwa 16 Bilder integriert wird. Er kann aber auch bei starken Bewegungen oder in Fällen, bei den keine Integration erfolgen soll, den Wert eins annehmen. Anstelle der zwei ersten Multiplikationsstufen 11 und 21 läßt sich nur eine Multiplikationsstufe 20 einsetzen, wobei aber auf eine pro Kanal getrennte Einstellung der Faktoren k verzichtet wird.

## Patentansprüche

1. Röntgenstereo-Subtraktionsvorrichtung, die einen Röntgengenerator (1), Mittel zur Erzeugung zweier Röntgenstrahlenbündel von zwei in geringem Abstand angeordneten Fokussen (2, 3), deren Zentralstrahlen sich in der Aufnahmeebene schneiden, und eine Röntgenbildverstärker-Fernsehkette (5 bis 9) aufweist, mit einem Röntgenbildverstärker (5), auf dessen Eingangsleuchtschirm die von beiden Fokussen (2, 3) zeitlich hintereinander erzeugten Strahlenbilder erscheinen, mit einer Fernsehkamera (6) zur Aufnahme der Röntgenbildverstärker-Ausgangsbilder, mit einer Zentraleinheit (9) zur Steuerung der Fernsehkette, mit einer Verarbeitungsschaltung (7) mit Bildspeichermitteln (13, 23) zur Einspeicherung von Röntgenstereo-Fernsehbildern, mit Subtraktionsstufen zur Subtraktion von einem gespeicherten und einem dem gespeicherten zeitlich nachfolgenden Videosignal, und mit einem daran angeschlossenen Stereo-Sichtgerät (8), dadurch gekennzeichnet, daß pro Kanal ein erster Bildspeicher (13, 23) vorhanden ist, in dem die Videosignale entsprechender aufeinanderfolgender Stereoteilbilder gewichtet summiert werden, daß an dem Ausgang des ersten Bildspeichers eine erste Subtraktionsstufe (16, 26) angeschlossen ist, deren zweitem Eingang das abgeschwächte Ausgangssignal des jeweils anderen ersten Bildspeichers (13, 23) zugeführt wird, daß der Ausgang der ersten Subtraktionsstufe (16, 26) mit einem zweiten Bildspeicher (17, 27) und einer zweiten Subtraktionsstufe (18, 28) verbunden ist, an deren zweitem Eingang der Ausgang des zweiten Bildspeichers (13, 23) angeschlossen ist, und daß an dem Ausgang der zweiten Subtraktionsstufe (18, 28) das Stereo-Sichtgerät (8) angeschlossen ist.

2. Röntgenstereovorrichtung nach Anspruch 1, dadurch gekennzeichnet, daß für die gewichtete Summierung Schaltungen vorgesehen sind, die zwei Multiplikationsstufen (11, 14, 21, 24) aufweisen, deren Ausgänge mit einer Additionsstufe (12, 22) verbunden sind, die an dem ersten Bildspeicher (13, 23) angeschlossen ist, wobei in der ersten Multiplikationsstufe (11, 21) das aktuelle Videosignal mit einem Faktor k und in der zweiten Multiplikationsstufe (14, 24) das Ausgangssignal des ersten Bildspeichers (13, 23) mit einem Faktor 1-k multipliziert wird.

3. Röntgenstereovorrichtung nach Anspruch 1 oder 2, dadurch gekennzeichnet, daß die Eingangsbildfrequenz der ersten Bildspeicher (13, 23) kleiner ist als deren Ausgangsbildfrequenz.

4. Röntgenstereovorrichtung nach einem der Ansprüche 1 bis 3, dadurch gekennzeichnet, daß an den Ausgängen der ersten Bildspeicher (13, 23) zur Abschwächung je ein Kennlinienspeicher (15, 25) angeschlossen ist, die mit der ersten Subtraktionsvorrichtung (16, 26) des jeweils anderen Kanals verbunden sind.

## Claims

1. An X-ray stereo subtraction device comprising an X-ray generator (1), means which cause two X-ray beams to be produced with two focal points (2, 3), arranged a short distance apart, and whose central rays intersect in the recording plane, and an X-ray image-amplifier television chain (5 to 9), an X-ray image-amplifier (5) producing the radiation images consecutively from the two focal points (2, 3) to appear on the input fluorescent screen of said X-ray image-amplifier (5), a television camera (6) which records the images at the X-ray image-amplifier output, a central unit (9) which controls the television chain, a processing circuit (7) including image-storage means (13, 23) for the storage of X-ray stereo television images, with subtraction stages for the subtraction of a stored video signal and the video signal which occurs following the stored video signal, and with a stereo display device (8) connected thereto, characterised in that in respect of each channel a first image-store (13, 23) is provided, in which the video signals of corresponding, consecutive stereo sub-images are added in weighted form, that the output of the first image-store is connected to a first subtraction stage (16, 26), whose second input is supplied with the weakened output signal of the respective other first image-store (13, 23), that the output of the first subtraction stage (16, 26) is connected to a second image-store (17, 27) and a second subtraction stage (18, 28), whose second input is connected to the output of the second image-store (13, 23), and that the stereo display device (8) is connected to the output of the second subtraction stage (18, 28).

2. An X-ray stereo device as claimed in Claim 1, characterised in that for the weighted addition, circuits are provided which include two multiplication stages (11, 14, 21, 24) whose outputs are connected to an addition stage (12, 22) connected to the first image-store (13, 23), where in the first multiplication stage (11, 21) the current video signal is multiplied by a factor k, and in the second multiplication stage (14, 24) the output signal of the first image-store (13, 23) is multiplied by a factor of 1-k.

3. An X-ray stereo device as claimed in Claim 1 or 2, characterised in that the video input frequency of the first image-stores (13, 23) is lower than their video output frequency.

4. An X-ray stereo device as claimed in one of Claims 1 to 3, characterised in that the outputs of the first image-stores (13, 23) are each connected to a characteristic-curve store (15, 25) which produce the weakening and are connected to the first subtraction device (16, 26) of the respective other channel.

## Revendications

1. Dispositif stéréo-radiographique à soustraction, qui comporte un générateur radiologique (1), des moyens pour produire deux faisceaux de rayons X à partir de deux foyers (2, 3) situés à une faible distance l'un de l'autre et dont les rayons centraux s'intersectent dans le plan d'enregistrement, et une chaîne de télévision à intensificateur de brillance radiologique (5 à 9), comportant un intensificateur de brillance radiologique (5) sur l'écran d'entrée duquel apparaissent les champs de rayonnement produits successivement par les deux foyers (2, 3), une caméra de télévision (6) servant à enregistrer les images de sortie de l'amplificateur de brillance radiologique, une unité centrale (9) servant à commander la chaîne de télévision, un circuit de traitement (7) comportant des moyens (13, 23) de mémorisation des images, servant à mémoriser des images de télévision stéréo-radiologiques, des étages soustracteurs servant à former la différence entre un signal vidéo mémorisé et un signal vidéo apparaissant après le signal vidéo mémorisé, et un appareil de visualisation stéréoscopique (8) raccordé à ces étages soustracteurs, caractérisé par le fait qu'il est prévu, pour chaque canal, une première mémoire d'images (13, 23), dans laquelle les signaux vidéo d'images partielles stéréoscopiques successives correspondantes sont additionnés en étant pondérés, qu'à la sortie de la première mémoire d'images se trouve raccordé un premier étage soustracteur (16, 26), à la seconde entrée duquel est envoyé le signal de sortie affaibli de l'autre première mémoire d'images respective (13, 23), que la sortie du premier étage soustracteur (16, 26) est reliée à une seconde mémoire d'images (17, 27) et à un second étage soustracteur (18, 28), à la seconde entrée duquel est raccordée la sortie de la seconde mémoire d'images (13, 23), et que l'appareil de visualisation stéréoscopique (8) est raccordé à la sortie du second étage soustracteur (18, 28).

2. Dispositif stéréo-radiographique suivant la revendication 1, caractérisé par le fait que pour réaliser la sommation pondérée, il est prévu des circuits qui comportent deux étages multiplicateurs (11, 14, 21, 24), dont les sorties sont reliées à un étage additionneur (12, 22), qui est raccordé à la première mémoire d'images (13, 23), auquel cas, dans le premier étage multiplicateur (11, 21), le signal vidéo présent est multiplié par un facteur k et, dans le second étage multiplicateur (14, 24), le signal de sortie de la première mémoire d'images (13, 23) est multiplié par un facteur 1-k.

3. Dispositif stéréo-radiographique suivant la revendication 1 ou 2, caractérisé par le fait que la fréquence des images d'entrée de la première mémoire d'images (13, 23) est inférieure à la fréquence des images de sortie de cette mémoire.

4. Dispositif stéréo-radiographique suivant l'une des revendications 1 à 3, caractérisé par le fait qu'aux sorties de la première mémoire d'images (13, 23) se trouvent raccordées respectivement, pour l'affaiblissement, des mémoires (15, 25) de courbes caractéristiques, qui sont reliées chacune au premier dispositif soustracteur (16, 26) de l'autre canal respectif.

FIG 1

FIG 2